# EUROPÄISCHE PATENTSCHRIFT

(11) **EP 2 726 239 B1**
(45) Veröffentlichungstag und Bekanntmachung des Hinweises auf die Patenterteilung: **10.02.2016**
(21) Anmeldenummer: 12730451.7
(22) Anmeldetag: 19.06.2012
(51) Int. Cl.: B23D 61/12, B23D 61/00

(54) **WERKZEUG**
TOOL
OUTIL

(30) Priorität: 01.07.2011 DE 102011078488
(43) Veröffentlichungstag der Anmeldung: 07.05.2014
(73) Patentinhaber: Robert Bosch GmbH, 70442 Stuttgart (DE)
(72) Erfinder: KARLEN, Urs, CH-3922 Stalden (CH)
(86) Internationale Anmeldenummer: PCT/EP2012/061647
(87) Internationale Veröffentlichungsnummer: WO 2013/004481

(56) Entgegenhaltungen:
- EP-A1- 1 170 082
- DE-A1- 10 325 392
- DE-A1- 19 804 762
- DE-A1-102007 058 889
- DE-A1-102008 041 425
- DE-U1-202004 007 929
- DE-U1-202010 013 008
- US-A1- 2005 245 935

## Beschreibung

### Stand der Technik

Es sind bereits Werkzeuge, insbesondere Tauchsägeblätter, mit einem Sägeblatt mit zumindest einem Grundkörper und zumindest einem Arbeitsteil, das zumindest eine Arbeitskante mit einer Sägeverzahnung aufweist und mit dem Grundkörper entlang einer geraden Verbindungskante einstückig verbunden ist, bekannt. Die Arbeitskante mit der Sägeverzahnung ist bei diesen Werkzeugen gerade ausgebildet.

### Offenbarung der Erfindung

Die Erfindung geht aus von einem Werkzeug, insbesondere einem Tauchsägeblatt gemäß dem Oberbegriff des Patentanspruchs 1, mit einem Sägeblatt mit zumindest einem Grundkörper und zumindest einem Arbeitsteil, das zumindest eine Arbeitskante mit einer Sägeverzahnung aufweist und mit dem Grundkörper entlang einer geraden Verbindungskante einstückig verbunden ist.

Die Arbeitskante weist eine gebogene und/oder polygonähnliche Ausbildung auf. Ein derartiges Werkzeug geht beispiels weise aus der DE 20 2010 013 008 U1 hervor. Die Erfindung sieht ein Werkzeug gemäß dem Patentanspruch 1 vor. Unter einem "Tauchsägeblatt" soll in diesem Zusammenhang insbesondere ein Werkzeug mit einem Sägeblatt verstanden werden, das dazu vorgesehen ist, von einer Handwerkzeugmaschine bevorzugt um eine Rotationsachse oszillierend angetrieben zu werden. Das Werkzeug umfasst ein Befestigungsteil, mit dem es an einer Handwerkzeugmaschine befestigt werden kann. Das Tauchsägeblatt kann sich insbesondere dazu eignen, eine schlitzförmige Ausnehmung durch Eintauchen in ein Werkstück zu erzeugen. Unter einem "Sägeblatt" soll in diesem Zusammenhang insbesondere eine dünne, an mindestens einem Rand mit einer Sägeverzahnung versehene Platte verstanden werden, die zu einer spanabhebenden Bearbeitung eines Werkstücks mittels der Sägeverzahnung vorgesehen ist. Unter einem "Grundkörper" des Sägeblatts soll in diesem Zusammenhang ein Teil des Sägeblatts verstanden werden, der bevorzugt aus einem zähen, bruchfesten Material gefertigt ist. Bevorzugt ist der Grundkörper aus einem Stahl gefertigt. Bevorzugt bildet der Grundkörper den größeren Teil des Sägeblatts. Unter einem "Arbeitsteil" des Sägeblatts soll in diesem Zusammenhang insbesondere ein Teil des Sägeblatts verstanden werden, der die Arbeitskante mit der Sägeverzahnung aufweist. Bevorzugt ist das Arbeitsteil aus einem harten, verschleißfesten Material gefertigt, besonders bevorzugt einem Schnellarbeitsstahl (HSS). Es sind aber auch weitere, dem Fachmann geläufige geeignete Materialien für den Grundkörper und/oder den Arbeitsteil denkbar. Insbesondere ist das Arbeitsteil aus einem härteren und/oder verschleißfesteren Material gefertigt als der Grundkörper. Dabei kann das Material des Arbeitsteils auch ein Hartmetall aufweisen oder aus einem Hartmetall bestehen. Das Hartmetall weist dabei vorzugsweise mindestens ein Carbid - z.B. Tantal-, Titan- und/oder Wolframcarbid - und/oder ein Nitrid - z.B. Bor- und/oder Titannitrid - auf. Unter einer "Arbeitskante" soll in diesem Zusammenhang insbesondere eine Verbindungslinie verstanden werden, die von den Spitzen der Sägeverzahnung des Arbeitsteils gebildet wird. Unter einer "Verbindungskante" soll in diesem Zusammenhang insbesondere eine Kante verstanden werden, entlang der der Grundkörper mit dem Arbeitsteil einstückig, insbesondere stoffschlüssig, verbunden ist. Das Arbeitsteil kann mit dem Grundkörper entlang der Verbindungskante insbesondere durch Elektronenstrahl- oder Laserschweißen verbunden sein. Es sind aber auch weitere, dem Fachmann geläufige Verfahren zur stoffschlüssigen Verbindung denkbar. Unter einer "gebogenen" Arbeitskante soll in diesem Zusammenhang insbesondere verstanden werden, dass die von der Verbindungslinie der Zahnspitzen gebildete Arbeitskante eine Krümmung aufweist. Bevorzugt wird die gebogene Arbeitskante von der kürzesten, stetig gekrümmten Verbindungslinie zwischen den Zahnspitzen gebildet. Die Krümmung kann entlang der Arbeitskante unterschiedlich stark sein. Zum Beispiel kann die Verbindungslinie zumindest parabelähnlich sein. Bevorzug ist die Arbeitskante bezüglich einer Mittelsenkrechten der Arbeitskante symmetrisch ausgebildet. Besonders bevorzugt bildet die Arbeitskante zumindest im Wesentlichen ein Kreissegment. Unter "im Wesentlichen" soll in diesem Zusammenhang insbesondere verstanden werden, dass mehr als 50%, bevorzugt mehr als 80% der Länge der Arbeitskante ein Kreissegment bilden. Besonders bevorzugt liegt das Zentrum des Kreissegments im Wesentlichen auf der Rotationsachse einer oszillierenden Sägebewegung, für die das Sägeblatt vorgesehen ist. Unter "im Wesentlichen" soll in diesem Zusammenhang insbesondere verstanden werden, dass die Lage des Zentrums des Kreissegments und die Lage der Rotationsachse um weniger als 20%, bevorzugt um weniger als 10%, besonders um weniger als 5% bezogen auf den kürzesten Abstand der Rotationsachse zur Mitte der Arbeitskante abweicht. Unter einer "polygonähnlichen" Ausbildung der Arbeitskante soll in diesem Zusammenhang insbesondere verstanden werden, dass die Arbeitskante mehrere Segmente enthält, deren Verbindungslinien der Zahnspitzen zumindest im Wesentlichen Geraden bilden. Bevorzugt bilden jeweils mindestens drei Zahnspitzen ein Geradensegment. Unter "im Wesentlichen" soll in diesem Zusammenhang insbesondere verstanden werden, dass die Abweichung von einer Geraden weniger als 10%, bevorzugt weniger als 5%, besonders bevorzugt weniger als 1% der Länge des jeweiligen Segments beträgt. Bevorzugt entsprechen die Zahnabstände von Zähnen der Sägeverzahnung von benachbarten Segmenten den Zahnabständen der Zähne innerhalb eines Segments der Sägeverzahnung, sodass zwischen den Segmenten keine Lücken bestehen. Besonders bevorzugt liegen die Verbindungspunkte der Segmente zumindest im Wesentlichen auf einem Kreissegment. Besonders bevorzugt liegt das Zentrum des Kreissegments im Wesentlichen auf der Rotationsachse der Sägebewegung, für die das Sägeblatt vorgesehen ist. Ein Einhaken der äußeren Ecken der Sägeverzahnung beim Eintauchen in das Werkstück kann durch die gebogene und/oder polygonähnliche Arbeitskante vermieden werden. Es kann ein besonders präzises Sägeergebnis erreicht werden. Vibrationen können minimiert werden. Ein Ausbrechen und/oder Verhaken des Sägeblatts kann vermieden werden. Das Sägeblatt kann besonders langlebig sein. Es können besonders harte Werkstücke, wie zum Beispiel Metalle, bearbeitet werden.

Bevorzugt umfasst ein Bimetallstreifen den Grundkörper und das Arbeitsteil. Unter einem "Bimetallstreifen" soll in diesem Zusammenhang insbesondere ein Materialstreifen verstanden werden, der zumindest aus zwei unterschiedlichen Metallen und/oder Metalllegierungen besteht. Insbesondere kann der Materialstreifen aus einem zähen Grundmaterial bestehen und zumindest teilweise aus einem zur Bildung einer Sägeverzahnung besonders geeigneten, härteren, verschleißfesten Material bestehen. Der zähe Teil des Bimetallstreifens kann den Grundkörper, der verschleißfeste, härtere Teil das Arbeitsteil des Sägeblatts bilden. Das Grundmaterial kann bevorzugt von einem Stahl gebildet werden, während der härtere Teil bevorzugt von einem Schnellarbeitsstahl gebildet sein kann. Dabei kann das Material des härteren Teils auch ein Hartmetall aufweisen oder aus einem Hartmetall bestehen. Das Hartmetall weist dabei vorzugsweise mindestens ein Carbid - z.B. Tantal-, Titan- und/oder Wolframcarbid - und/oder ein Nitrid - z.B. Bor- und/oder Titannitrid - auf. Die beiden Teile sind entlang einer geraden Verbindungskante stoffschlüssig verbunden, insbesondere durch Elektronenstrahl- oder Laserschweißen. Es kann ein besonders langlebiges, effizientes Sägeblatt erreicht werden.

Es wird vorgeschlagen, dass das Sägeblatt aus einem Bimetallstreifen mit zwei zumindest im Wesentlichen parallelen Kanten gefertigt ist. Bevorzugt wird das Sägeblatt aus einem zumindest im Wesentlichen rechteckigen Bimetallstreifen gefertigt. Besonders bevorzugt ist die Verbindungskante der beiden Metalle und/oder Metalllegierungen des Bimetallstreifens parallel zu zumindest zwei parallelen Kanten des Bimetallstreifens. Insbesondere kann das Sägeblatt aus einem Bimetallstreifen gefertigt werden, der durch Abtrennen von einem Bimetallband hergestellt wird. Bevorzugt liegen die Verbindungskante und die beiden parallelen Kanten in Längsrichtung des Bimetallbands. Unter "im Wesentlichen parallel" soll in diesem Zusammenhang insbesondere verstanden werden, dass eine Abweichung von einer Parallelität der beiden Kanten weniger als 10°, bevorzugt weniger als 5°, besonders bevorzugt weniger als 1° beträgt. Unter "im Wesentlichen rechteckig" soll in diesem Zusammenhang insbesondere verstanden werden, dass die Kanten des Materialstreifens untereinander Winkel zwischen 85° und 95°, bevorzugt zwischen 88° und 92°, besonders bevorzugt zwischen 89° und 91° einschließen. Das Sägeblatt kann besonders kostengünstig aus einem Bimetallstreifen hergestellt werden.

Die Arbeitskante mit der Sägeverzahnung kann durch ein Stanzverfahren, Laserschneiden oder ein anderes, dem Fachmann bekanntes Verfahren hergestellt werden. Vorteilhaft ist die Arbeitskante und/oder die Sägeverzahnung in einem Fräsprozess hergestellt. Besonders vorteilhaft ist die Arbeitskante und/oder die Sägeverzahnung in einem Schleifprozess hergestellt. In einem Schleifprozess kann eine besonders hochwertige Arbeitskante und/oder Sägeverzahnung hergestellt werden. Es sind auch dem Fachmann als sinnvoll erscheinende Kombinationen verschiedener Fertigungsverfahren möglich.

Weiter wird vorgeschlagen, dass eine Höhe des Arbeitsteils größer ist als eine Höhe der Sägeverzahnung. Unter einer "Höhe des Arbeitsteils" soll in diesem Zusammenhang insbesondere das zur Verbindungskante senkrechte Maß von der Mitte der Arbeitskante bis zum Beginn des Grundkörpers verstanden werden. Unter einer "Höhe der Sägeverzahnung" soll in diesem Zusammenhang insbesondere eine senkrecht zur Verbindungskante gemessene Höhe zwischen der Zahnspitze mit dem größten Abstand zur Verbindungskante zur Zahnspitze mit dem geringsten Abstand zur Verbindungskante verstanden werden. Es kann vorteilhaft erreicht werden, dass zumindest alle Zahnspitzen aus hartem und/oder verschleißfestem Material bestehen. Besonders vorteilhaft soll unter einer "Höhe der Sägeverzahnung" in diesem Zusammenhang die maximale Ausdehnung der Sägeverzahnung vom Zahngrund bis zu den Zahnspitzen aller Zähne im Sägeblatt senkrecht zur Verbindungskante gemessen verstanden werden. Es kann vorteilhaft erreicht werden, dass die Sägeverzahnung vollständig aus hartem und/oder verschleißfestem Material besteht. Die Verschleißfestigkeit des Sägeblatts kann verbessert werden.

Das Sägeblatt ist mit dem Befestigungsteil überlappend verbunden. Es kann eine besonders stabile Verbindung zwischen dem Arbeitsteil und dem Sägeblatt erzielt werden. Es sind verschiedene, dem Fachmann geläufige Verbindungsverfahren denkbar. Das Sägeblatt kann mit dem Befestigungsteil verklebt oder vernietet werden. Bevorzugt ist das Sägeblatt mit dem Befestigungsteil über eine Punktschweißverbindung befestigt. Es kann eine besonders robuste, kostengünstige Verbindung erreicht werden. Es kann auf weitere Mittel zur Verbindung verzichtet werden, wie Nieten und/oder Schweiß- und Klebstoffe.

Weiter wird ein Verfahren zur Herstellung eines Werkzeugs gemäß dem Patentanspruch 6 vorgeschlagen. Es wird vorgeschlagen, dass in einem ersten Herstellungsschritt ein Bimetallstreifen von einem Bimetallband abgetrennt wird. Bevorzugt wird der Bimetallstreifen zumindest im Wesentlichen quer zur Verbindungskante der beiden Metalle und/oder Metalllegierungen des Bimetallstreifens abgetrennt. Der Bimetallsteifen umfasst bevorzugt zumindest einen aus einem zähen und zumindest einen aus einem härteren, verschleißfesteren Metall hergestellten Teil, welche über eine Verbindungskante stoffschlüssig verbunden sind. Der zähe Teil bildet bevorzugt den Grundkörper des Sägeblatts, der härtere, verschleißfeste Teil das Arbeitsteil des Sägeblatts. In einem weiteren Herstellungsschritt wird an einer geraden, bevorzugt parallel zur Verbindungskante ausgerichteten Kante des Arbeitsteils die gebogene und/oder polygonähnliche Arbeitskante und die Sägeverzahnung gebildet. Die Arbeitskante mit der Sägeverzahnung kann mit einem Fräsverfahren, bevorzugt mittels eines Schleifverfahrens, gebildet werden. Es sind auch Stanzverfahren und weitere, dem Fachmann geläufige Verfahren denkbar. Die Arbeitskante und die Sägeverzahnung werden in einem Arbeitsschritt hergestellt. In einem weiteren Arbeitsschritt wird das Sägeblatt mit einer geraden Kante mit dem Befestigungsteil überlappend verbunden, insbesondere durch eine Punktschweißverbindung. Das Sägeblatt kann besonders kostengünstig und präzise hergestellt werden. Insbesondere kann ein Verzug des Sägeblatts vermieden werden und eine besonders präzise Planlage des Sägeblatts am Befestigungsteil erreicht werden.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Darstellung eines erfindungsgemäßen Werkzeugs mit einem Sägeblatt,
- Fig. 2: eine schematische Darstellung eines Bimetallstreifens zur Herstellung eines Sägeblatts,
- Fig. 3: eine schematische Darstellung des Sägeblatts nach der Anbringung einen Arbeitskante mit einer Sägeverzahnung und
- Fig. 4: eine schematische Darstellung eines Sägeblatts nach der Anbringung einen Arbeitskante mit einer Sägeverzahnung in einem zweiten Ausführungsbeispiel.

### Beschreibung der Ausführungsbeispiele

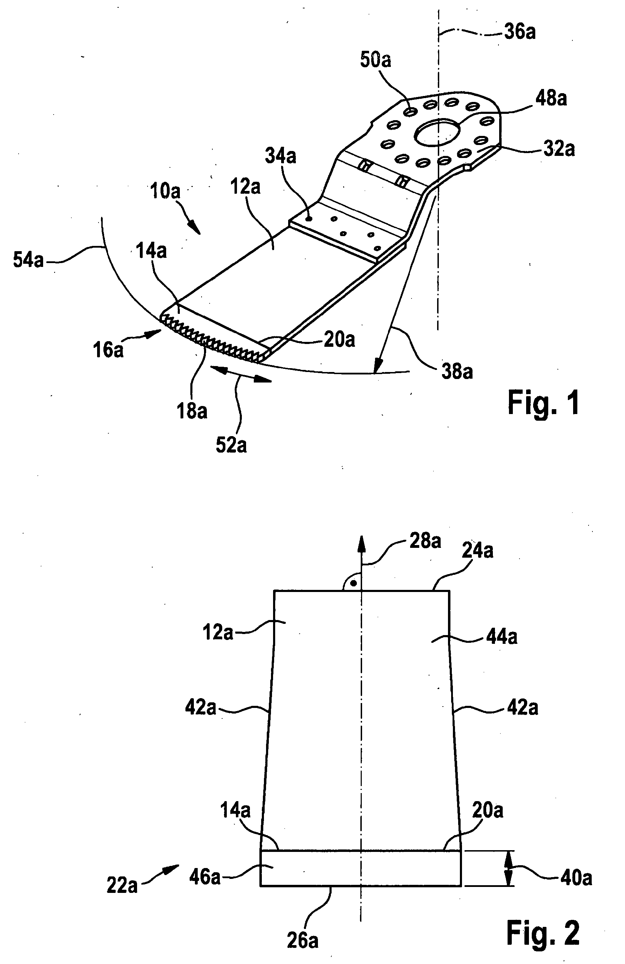

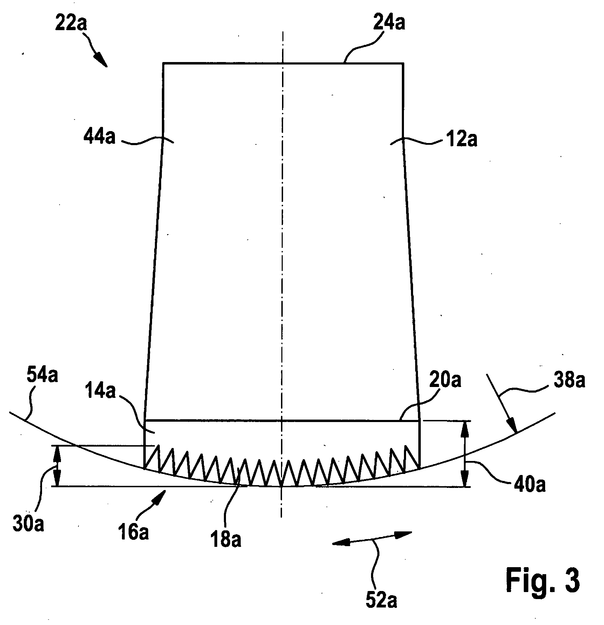

Figur 1 zeigt ein als Tauchsägeblatt ausgebildetes Werkzeug mit einem Sägeblatt 10a mit einem Grundkörper 12a und einem Arbeitsteil 14a, das eine Arbeitskante 16a mit einer Sägeverzahnung 18a aufweist und mit dem Grundkörper 12a entlang einer geraden Verbindungskante 20a einstückig verbunden ist. Die von einer stetig gekrümmten Linie entlang von Zahnspitzen der Sägeverzahnung 18a gebildete Arbeitskante 16a ist gebogen ausgebildet. Das Sägeblatt 10a ist aus einem Bimetallstreifen 22a, der den Grundkörper 12a und das Arbeitsteil 14a umfasst, gefertigt (Figur 2). Der Bimetallstreifen 22a weist einen breiteren Stahlstreifen 44a und einen schmäleren Schnellarbeitsstahlstreifen 46a auf. Alternativ order ergänzend kann der schmälere Schnellarbeitsstahlstreifen 46a auch aus einem Material gefertigt sein, welche mindestens ein Hartmetall aufweist oder aus mindestens einem Hartmetall besteht. Das Hartmetall weist dabei vorzugsweise als Verstärkungsphase mindestens ein Carbid - z.B. Tantal-, Titanund/oder Wolframcarbid - und/oder ein Nitrid - z.B. Bor- und/oder Titannitrid - auf. Im Sinne der Erfindung soll insbesondere auch ein aus einem breiteren Stahlstreifen 44a und einem schmäleren, ein Hartmetall umfassenden Streifen 46a als Bimetallstreifen 22a verstanden werden. Die beiden Streifen 44a, 46a sind entlang der Verbindungskante 20a über eine Schweißverbindung verbunden, zum Beispiel eine Laser- oder Elektronenstrahlschweißverbindung. Der Bimetallsteifen 22a weist zwei parallele Kanten 24a, 26a auf. Die Verbindungskante 20a ist zu den Kanten 24a, 26a ebenfalls parallel. In einem Schleifprozess wird am Bimetallstreifen 22a die Arbeitskante 16a und die Sägeverzahnung 18a angebracht (Figur 3). Eine senkrecht zur Mitte der Arbeitskante bzw. Verbindungskante 20a gemessene Höhe 40a des Arbeitsteils 14a ist größer als eine Höhe 30a der Sägeverzahnung 18a. Die Höhe 30a der Sägeverzahnung 18a erstreckt sich über die maximale Ausdehnung aller Sägezähne. Es ist auch möglich, dass die Höhe 40a des Arbeitsteils 14a so gewählt wird, dass zumindest alle Zahnspitzen der Sägeverzahnung 18a im Arbeitsteil 14a zu liegen kommen.

Ein Befestigungsteil 32a, mit dem der Grundkörper 12a des Sägeblatts 10a über eine Punktschweißverbindung 34a überlappend verbunden ist, dient der Befestigung des Werkzeugs an einer nicht näher dargestellten Handwerkzeugmaschine. Das Werkzeug ist dazu vorgesehen, von der Handwerkzeugmaschine um eine Rotationsachse 36a oszillierend angetrieben zu werden. Ein erfindungsgemäßes Zentriermittel 48a, welches als Ausnehmung im Befestigungsteil 32a ausgebildet ist, dient der Zentrierung des Werkzeugs an einer Antriebsachse der Handwerkzeugmaschine. Formschlussmittel 50a dienen einer Drehmomentübertragung von der Handwerkzeugmaschine sowie der Festlegung einer Drehlage. Die Krümmung der Arbeitskante 16a entspricht einem Kreissegment mit einem Radius 38a um die Rotationsachse 36a. Die Kante 24a des Grundkörpers 12a ist der Rotationsachse 36a zugewandt. Wird durch ein Eintauchen des Werkzeugs in ein Werkstück ein Schlitz in das Werkstück gesägt, verhakt sich die Arbeitskante 16a mit der Sägeverzahnung 18a nicht. Die Sägeverzahnung 18a bewegt sich mit einer Sägebewegung 52a entlang einer Kreisbahn 54a mit dem Radius 38a um die Rotationsachse 36a. Die gekrümmte Arbeitskante 16a mit der Sägeverzahnung 18a führt einen gleichmäßigen Schnitt aus.

Zur Herstellung des Werkzeugs werden die Arbeitskante 16a und die Sägeverzahnung 18a in einem Arbeitsschritt hergestellt. Zunächst wird aus einem nicht dargestellten Bimetallband der Bimetallstreifen 22a durch ein Trennwerkzeug abgetrennt und an den Trennkanten des Bimetallstreifens 22a werden die Seitenkanten 42a erzeugt. Die Seitenkanten 42a sind in Richtung der Rotationsachse 36a geneigt, so dass sich das Sägeblatt 10a in Richtung der Rotationsachse 36a verjüngt. Der Bimetallstreifen 22a enthält einen breiteren Stahlstreifen 44a und einen schmäleren Schnellarbeitsstahlstreifen 46a, die entlang der Verbindungskante 20a stoffschlüssig verbunden sind. Eine Außenkante des Stahlstreifens 44a bildet die Kante 24a des Grundkörpers 12a des Sägeblatts 10a und eine Außenkante des Schnellarbeitsstahlstreifens 46a die Kante 26a des Arbeitsteils 14a des Sägeblatts 10a. An der Kante 26a des Arbeitsteils 14a wird in einem Schleifprozess die gekrümmte Arbeitskante 16a mit der Sägeverzahnung 18a erzeugt. Der Grundkörper 12a wird mit dem Befestigungsteil 32a überlappend mittels einer Punktschweißung verbunden. Eine Mittelnormale 28a der Kante 24a ist in Richtung der Rotationsachse 36a des Befestigungsteils 32a ausgerichtet.

Die nachfolgende Beschreibung und die Zeichnungen eines weiteren Ausführungsbeispiels beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung des anderen Ausführungsbeispiels verwiesen werden kann. Zur Unterscheidung der Ausführungsbeispiele ist anstelle des Buchstabens a des ersten Ausführungsbeispiels der Buchstabe b den Bezugszeichen des weiteren Ausführungsbeispiels nachgestellt.

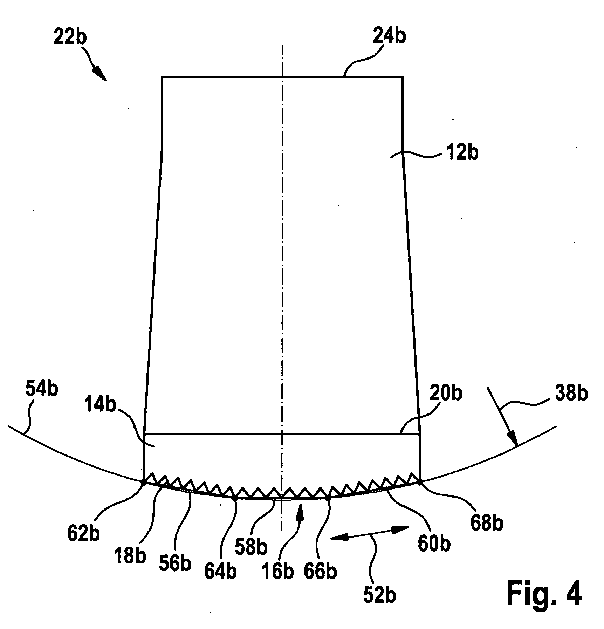

Figur 4 zeigt ein Sägeblatt 10b in einem weiteren Ausführungsbeispiel. Eine Arbeitskante 16b des Sägeblatts 10b ist polygonähnlich ausgebildet. Die Arbeitskante 16b weist drei gerade Polygonsegmente 56b, 58b, 60b auf. Das mittlere Polygonsegment 58b ist parallel zu einer Verbindungskante 20b ausgerichtet. Die Polygonsegmente 56b und 60b sind gegenüber dem Polygonsegment 58b in Richtung einer Rotationsachse 36b geneigt. Endpunkte 62b, 64b, 66b, 68b der Polygonsegmente 56b, 58b, 60b liegen auf einer Kreisbahn 54b mit einem Radius 38b um die Rotationsachse 36b. Es sind auch Ausführungen mit einer größeren Zahl an Polygonsegmenten denkbar.

## Patentansprüche

1. Werkzeug, insbesondere Tauchsägeblatt, mit einem Sägeblatt (10a, b) mit zumindest einem Grundkörper (12a, b) und zumindest einem Arbeitsteil (14a, b), das zumindest eine Arbeitskante (16a, b) mit einer Sägeverzahnung (18a, b) aufweist und mit dem Grundkörper (12a, b) entlang einer geraden Verbindungskante (20a, b) einstückig verbunden ist, wobei die Arbeitskante (16a, b) eine gebogene und/oder polygonähnliche Ausbildung aufweist, **gekennzeichnet durch** ein Befestigungsteil (32a, b) zu einer Befestigung an einer Handwerkzeugmaschine, mit dem das Sägeblatt (10a, b) überlappend verbunden ist, und welches eine als ein Zentriermittel (48a) ausgebildete Ausnehmung aufweist.

2. Werkzeug nach Anspruch 1, **dadurch gekennzeichnet, dass** ein Bimetallstreifen (22a, b) den Grundkörper (12a, b) und das Arbeitsteil (14a, b) umfasst.

3. Werkzeug nach Anspruch 2, **dadurch gekennzeichnet, dass** das Sägeblatt (10a, b) aus einem Bimetallstreifen (22a, b), der zumindest zwei zumindest im Wesentlichen parallele Kanten (24a, b; 26a, b) aufweist, gefertigt ist.

4. Werkzeug nach einem der vorhergehenden Ansprüche, **dadurch gekennzeichnet, dass** eine Höhe (40a, b) des Arbeitsteils (14a, b) größer ist als eine Höhe (30a, b) der Sägeverzahnung (18a, b).

5. Werkzeug nach einem der vorhergehenden Ansprüche, **dadurch gekennzeichnet, dass** das Sägeblatt (10a, b) mit dem Befestigungsteil (32a, b) über eine Punktschweißverbindung (34a, b) befestigt ist.

6. Verfahren zur Herstellung eines Werkzeugs nach einem der vorhergehenden Ansprüche, **dadurch gekennzeichnet, dass** die Arbeitskante (16a, b) und die Sägeverzahnung (18a, b) in einem Arbeitsschritt hergestellt werden.

7. Verfahren nach Anspruch 6, **dadurch gekennzeichnet, dass** die Arbeitskante (16a, b) und/oder die Sägeverzahnung (18a, b) in einem Schleifprozess und/oder einem Fräsprozess hergestellt ist.

## Claims

1. Tool, in particular a plunge-cut saw blade, that has a saw blade (10a, b) comprising at least one main body (12a, b) and at least one working part (14a, b), which working part has at least one working edge (16a, b) having a set of saw teeth (18a, b) and is connected integrally to the main body (12a, b) along a straight connecting edge (20a, b), the working edge (16a, b) having a curved and/or polygon-like form, **characterized by** a fastening part (32a, b) for fastening to a handheld power tool, to which the saw blade (10a, b) is connected in an overlapping manner and which fastening part (32a, b) has an opening formed as a centring means (48a).

2. Tool according to Claim 1, **characterized in that** a bimetallic strip (22a, b) comprises the main body (12a, b) and the working part (14a, b).

3. Tool according to Claim 2, **characterized in that** the saw blade (10a, b) is made of a bimetallic strip (22a, b) which has at least two edges (24a, b; 26a, b) that are at least substantially parallel.

4. Tool according to any one of the preceding claims, **characterized in that** a height (40a, b) of the working part (14a, b) is greater than a height (30a, b) of the set of saw teeth (18a, b).

5. Tool according to any one of the preceding claims, **characterized in that** the saw blade (10a, b) is fastened to the fastening part (32a, b) by means of a spot-welded connection (34a, b).

6. Method for producing a tool according to any one of the preceding claims **characterized in that** the working edge (16a, b) and the set of saw teeth (18a, b) are produced in one working step.

7. Method according to Claim 6, **characterized in that** the working edge (16a, b) and/or the set of saw teeth (18a, b) is/are produced in a grinding process and/or a milling process.

## Revendications

1. Outil, en particulier lame de scie plongeante comprenant une lame de scie (10a, b) avec au moins un corps de base (12a, b) et au moins une partie de travail (14a, b) qui présente au moins une arête de travail (16a, b) avec une denture de scie (18a, b) et qui est connectée d'une seule pièce au corps de base (12a, b) le long d'une arête de liaison droite (20a, b), l'arête de travail (16a, b) présentant une forme cintrée et/ou quasi-polygonale, **caractérisé par** une partie de fixation (32a, b) pour effectuer une fixation à une machine-outil à main, à laquelle partie de fixation la lame de scie (10a, b) est connectée par chevauchement, et laquelle partie de fixation présente un évidement réalisé sous forme de moyen de centrage (48a).

2. Outil selon la revendication 1, **caractérisé en ce qu'**une lame bimétallique (22a, b) comprend le corps de base (12a, b) et la partie de travail (14a, b).

3. Outil selon la revendication 2, **caractérisé en ce que** la lame de scie (10a, b) est fabriquée à partir d'une lame bimétallique (22a, b) qui présente au moins deux arêtes au moins essentiellement parallèles (24a, b ; 26a, b).

4. Outil selon l'une quelconque des revendications précédentes, **caractérisé en ce qu'**une hauteur (40a, b) de la partie de travail (14a, b) est supérieure à une hauteur (30a, b) de la denture de scie (18a, b).

5. Outil selon l'une quelconque des revendications précédentes, **caractérisé en ce que** la lame de scie (10a, b) est fixée à la partie de fixation (32a, b) par le biais d'une liaison par soudage par points (34a, b).

6. Procédé de fabrication d'un outil selon l'une quelconque des revendications précédentes, **caractérisé en ce que** l'arête de travail (16a, b) et la denture de scie (18a, b) sont fabriquées en une seule étape de travail.

7. Procédé selon la revendication 6, **caractérisé en ce que** l'arête de travail (16a, b) et/ou la denture de scie (18a, b) sont fabriquées par un procédé de moulage et/ou un procédé de fraisage.
